# EUROPEAN PATENT APPLICATION

(11) **EP 3 267 396 A1**
(43) Date of publication of application: **10.01.2018**
(21) Application number: 17180385.1
(22) Date of filing: 07.07.2017
(51) Int. Cl.: G06T 7/80

(54) **VISION-ASSIST DEVICES AND METHODS OF CALIBRATING VISION-ASSIST DEVICES**

(30) Priority: 08.07.2016 US 201615205974
(71) Applicant: Toyota Motor Engineering & Manufacturing North America, Inc., Erlanger, KY 41018 (US)
(72) Inventor: DAYAL, Rajiv, Milpitas, CA California 95035 (US); TOW, Robert F., Los Gatos, CA California 95033 (US)
(74) Representative: D Young & Co LLP

(57) **Abstract**

Vision-assist devices and methods for calibrating a position of a vision-assist device worn by a user are disclosed. In one embodiment, a method of calibrating a vision-assist device includes capturing a calibration image using at least one capturing device of the vision-assist device, obtaining at least one attribute of the calibration image, and comparing the at least one attribute of the calibration image with a reference attribute. The method further includes determining an adjustment of the at least one image sensor based at least in part on the comparison of the at least one attribute of the calibration image with the reference attribute, and providing an output corresponding to the determined adjustment of the vision-assist device.

## Description

### TECHNICAL FIELD

Embodiments described herein generally relate to vision-assist devices, and more specifically, to vision-assist devices that provide feedback to a user regarding proper orientation of the vision-assist device to provide accurate automatic detection regarding objects in an environment.

### BACKGROUND

Blind or visually impaired persons have difficulty navigating within their environment because of their inability to detect the location and type of objects within the environment. Blind or visually impaired persons often use a cane to assist them in navigating a space. Other devices may use computer-based vision systems to detect objects within an environment using one or more object recognition algorithms. Although computer-based vision systems are able to detect objects present within image data, such vision systems are often incorrect in the type of object that is detected. For example, an object recognition algorithm may require a proper field of view or orientation of the camera because an improper angle of the object within the environment may prevent the object recognition algorithm from properly identifying an object. For example, in a wearable vision-assist device, due to differences in body types of users, the device may be tilted, and the images captured by the device may be analyzed improperly and incorrect information may be conveyed to the user.

Accordingly, alternative vision-assist devices for correcting the orientation of the vision-assist devices are desired.

### SUMMARY

In one embodiment, a method of calibrating a vision-assist device includes capturing a calibration image using at least one capturing device of the vision-assist device, obtaining at least one attribute of the calibration image, and comparing the at least one attribute of the calibration image with a reference attribute. The method further includes determining an adjustment of the at least one image sensor based at least in part on the comparison of the at least one attribute of the calibration image with the reference attribute, and providing an output corresponding to the determined adjustment of the vision-assist device.

In another embodiment, a vision-assist device includes an image sensor configured to capture image data, a feedback device configured to provide feedback to a user, a processor, and a non-transitory computer-readable medium. The non-transitory computer-readable medium stores computer-readable instructions that, when executed by the processor, causes the processor to capture a calibration image using one or more image sensor of the vision-assist device,_obtain at least one attribute of the calibration image, and compare the at least one attribute of the calibration image with a reference attribute. The computer-readable instructions further cause the processor to determine an adjustment of the at least one image sensor based at least in part on the comparison of the at least one attribute of the calibration image with the reference attribute, and provide feedback corresponding to the determined adjustment of the vision-assist device using the feedback device.

These and additional features provided by the embodiments of the present disclosure will be more fully understood in view of the following detailed description, in conjunction with the drawings.

### BRIEF DESCRIPTION OF THE DRAWINGS

The embodiments set forth in the drawings are illustrative and exemplary in nature and not intended to limit the disclosure. The following detailed description of the illustrative embodiments can be understood when read in conjunction with the following drawings, where like structure is indicated with like reference numerals and in which:
FIG. 1 schematically depicts an example vision-assist device, according to one or more embodiments described and illustrated herein;
FIG. 2 schematically depicts an example vision-assist device configured to be worn around the neck of a user, according to one or more embodiments described and illustrated herein;
FIG. 3 schematically depicts the example vision-assist device of FIG. 2 as worn by a user, according to one or more embodiments described and illustrated herein;
FIG. 4 schematically depicts an example environment where a user may navigate;
FIG. 5A schematically depicts a tilted image of an exit sign captured by image sensors of a vision-assist device;
FIG. 5B schematically depicts a upright image of an exit sign after the image sensor being repositioned by the user;
FIG. 6 graphically depicts a flowchart of an example calibration process executed by a processor according to one or more embodiments described and illustrated herein;
FIG. 7A schematically depicts an example image of a two-dimensional barcode used as a reference in calibrating a vision-assist device, wherein the example two-dimensional barcode is tilted due to an improperly worn vision-assist device according to one or more embodiments described and illustrated herein;
FIG. 7B schematically depicts an example image of a two-dimensional barcode used as a reference in calibrating a vision-assist device, wherein the example two-dimensional barcode is not tilted due to properly worn vision-assist device according to one or more embodiments described herein; and
FIG. 8 schematically depicts an example image of a wall corner and ceiling that is tilted due to an improperly worn vision-assist device.

### DETAILED DESCRIPTION

Embodiments disclosed herein are directed to vision-assist device and related systems and methods that utilize one or more calibration images to provide feedback to blind or visually impaired individuals regarding how to accurately position the vision-assist device. Generally, embodiments described herein may be configured as devices that capture image data of the user's environment using one or more image sensors (e.g., one or more cameras), and perform object recognition analysis to detect objects or people within the user's environment. The information should be accurately conveyed to the blind or visually impaired individual as he or she navigates the environment according to the information.

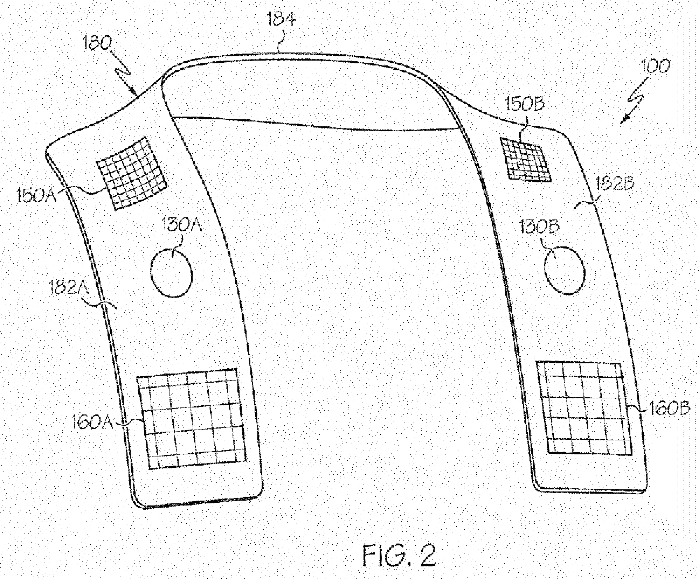

Embodiments described herein are configured to be worn by the user. For example, as shown in FIG. 2, a vision-assist device may be configured to be worn around the neck of a user. However, due to differences in body types of the users, the vision-assist device may be tilted or worn mistakenly, which may cause the images captured by the device to be analyzed improperly. For example, incorrect environmental information may be conveyed to the user when the vision-assist device fails to properly recognize objects in the environment. The user may not realize that the information is incorrect and may follow incorrect instruction from the vision-assist device. Further, even if the user realizes that the information from the vision-assist device is incorrect, he or she may not know how to calibrate (i.e., adjust) the vision-assist device.

Embodiments described herein use one or more calibration processes to ensure that the vision-assist device is properly worn by the user. As described in more detail below, in one non-limiting example, an object held by a user is used in a calibration image to generate feedback to the user as to how to orientate the vision-assist device. In another example, the vision-assist device captures one or more images of an edge defined by a wall, a ceiling, and/or a floor as a reference attribute to detect the orientation (i.e., "tilt") of the vision-assist device. Some embodiments use an inertial measurement unit to detect the orientation or tilt of the vision-assist device. In some embodiments, body type information regarding the body of the user is acquired by the vision-assist device using one or more images of the user and/or inputs with respect to the body type. Using the body type information and the calibration image, the vision-assist device instructs him or her as how to adjust the vision-assist device. Various embodiments of vision-assist devices, systems and methods for adjusting vision-assist devices will be described in more detail below.

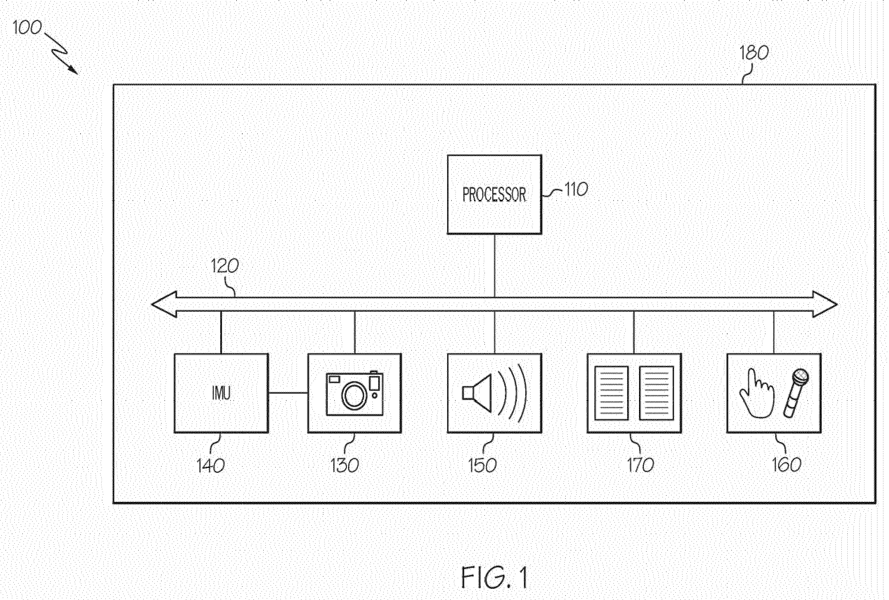

Referring now to FIG. 1, components of an example vision-assist device 100 is schematically depicted. The vision-assist device 100 comprises a housing 180 in or on which internal components are disposed, such as one or more processors 110, one or more image sensors 130, one or more inertial measurement unit 140, one or more audio devices 150, and one or more user input devices 160, and one or more memory components 170 storing computer-readable instructions. As described in more detail below, the housing 180 may take on any configuration and, in some embodiments, may be configured to be worn by the user, thereby freeing the user's hands as he or she operates the vision-assist device 100.

The memory component 170 may be configured as volatile and/or nonvolatile non-transitory computer readable medium and, as such, may include random access memory (including SRAM, DRAM, and/or other types of random access memory), flash memory, registers, compact discs (CD), digital versatile discs (DVD), magnetic disks, and/or other types of storage components. Additionally, the memory component 170 may be configured to store, among other things, operation logic, object recognition logic, and auditory message generation logic, as described in more detail below. The memory component 170 may also store data, such as image data captured by the one or more image sensors or externally acquired image data, for performing the object recognition analysis described hereinbelow.

A local interface 120 is also included in the embodiment depicted by FIG. 1, and may be implemented as a bus or other interface to facilitate communication among the components of the vision-assist device 100. Although not depicted in FIG. 1, the vision-assist device 100 may also include one or more network interface modules to connect the vision-assist device 100 to a remote computing device or a remote computer network. The network interface module may include any wired or wireless networking hardware, such as a modem, LAN port, wireless fidelity (Wi-Fi) card, WiMax card, mobile communications hardware, and/or other hardware for communicating with other networks and/or devices.

The one or more processors 110 may include any processing component configured to receive information and execute instructions (such as from the memory component 170). Example processing components include, but are not limited to, one or more general purpose processors, microcontrollers, and/or application-specific integrated circuits.

The one or more image sensors 130 are configured to capture image data of the environment (i.e., the "scene") in which the vision-assist device 100 operates. The image data digitally represents the scene in which the vision-assist device 100 operates, such as objects and people within the scene. The image sensor 130 may be configured as any sensor operable to capture image data, such as, without limitation, a charged-coupled device image sensors or complementary metal-oxide-semiconductor sensors capable of detecting optical radiation having wavelengths in the visual spectrum, for example. The one or more image sensors 130 may be configured to detect optical radiation in wavelengths outside of the visual spectrum, such as wavelengths within the infrared spectrum. In some embodiments, two image sensors 130 are provided to create stereo image data capable of capturing depth information.

The one or more inertial measurement units 140 may be configured to acquire the information with respect to the tilt or orientation of the vision-assist device 100. The one or more inertial measurement units 140 are communicatively coupled to the processor 110 such that it provides orientation information of the vision assist device and therefore the one or more image sensors 130 to the processor 110.

The one or more auditory devices 150 may be configured as speakers capable of receiving auditory signals from the processor 110 (either directly or indirectly from other hardware, such as amplifiers, drivers, digital-to-analog converts, and the like) to produce an auditory message capable of being heard by the user. In some embodiments, the one or more auditory devices 150 include a first speaker and a second speaker so that the auditory message is provided to the user in stereo. The one or more auditory devices 150 may be configured to convey information on both the environment around the user and the manner in which the user should adjust the position of the vision-assist device 100 to provide for an optimal field of view for the one or more image sensors 130.

The one or more user input devices 160 are provided for the user to communicate with the vision-assist device 100. The one or more user input devices 160 may be used by the user to complete tasks such as program preferences or settings, provide commands, and provide feedback to the vision-assist device 100. The one or more user input devices 160 may take on any appropriate form. For example, the one or more user input devices 160 may be configured as a keyboard, buttons, switches, touch-sensitive pads, microphones, and the like. Any appropriate user input device may be utilized. As described in more detail below, the one or more user input devices 160 may be used by the user to provide input regarding body type information of the user.

It should be understood that the vision-assist device 100 may include additional components not illustrated in FIG. 1, such as a power source, voltage regulators, analog-to-digital converters, digital-to-analog converters, drivers, signal conditioning circuits, electromagnetic filtering circuits, and the like.

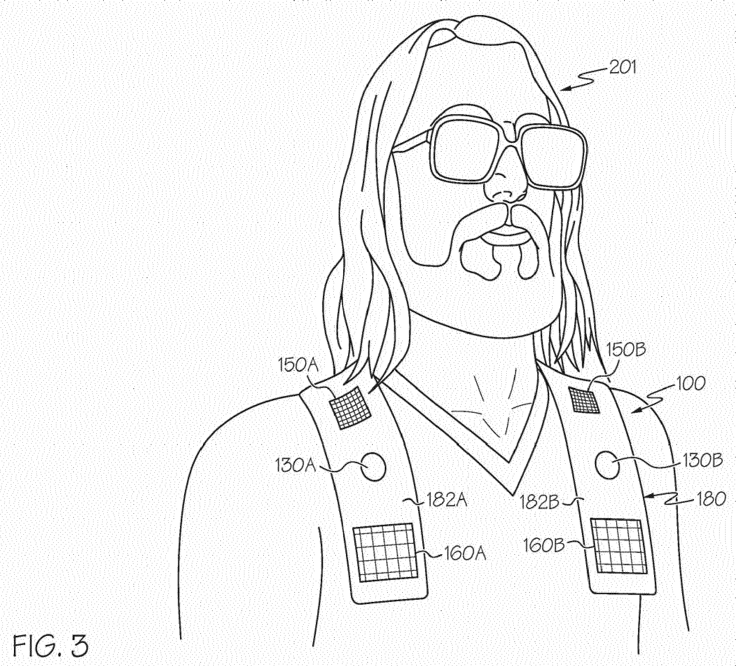

Referring now to FIGS. 2 and 3, a non-limiting, example vision-assist device 100 is schematically illustrated. FIG. 2 illustrates the example vision-assist device 100 without a user, while FIG. 3 illustrates the example vision-assist device of FIG. 2 worn by a user 210. Referring generally to both FIGS. 2 and 3, the example vision-assist device 100 has a necklace configuration intended to be worn around the neck of the user 210. The housing 180 of the vision-assist device defines a neck portion 184, a first chest portion 182A, and a second chest portion 182B. It should be understood that the housing 180 may be configured differently than what is illustrated in FIGS. 2 and 3, and that the housing 180 may take on different shapes and sizes in other embodiments.

In some embodiments, the housing 180 is made from a pliable material, such as, without limitation, ethylene-vinyl acetate. In other embodiments, the housing 180 is made from a rigid material.

Referring specifically to FIG. 3, the vision-assist device 100 is configured to be worn around the neck of the user 210 such that the neck portion 184 contacts, or is in close proximity to, the back of the user's neck. The first and second chest portions 182A, 182B are draped over the user's chest. In the illustrated example of FIGS. 2 and 3, the first chest portion 182A includes a first audio device 150A, a first image sensor 130A, and a first user input device 160A configured as a touch-sensitive pad or a plurality of mechanical buttons. Similarly, the second chest portion 182B includes a second audio device 150B, a second image sensor 130B, and a first user input device 160B. It should be understood that the arrangement of the various components within the housing 180 of the example vision-assist device 100 depicted in FIGS. 2 and 3 are for illustrative purposes only, and that more or fewer components may be provided, or arranged in a manner that is different from the arrangement depicted in FIGS. 2 and 3. As a non-limiting, alternative arrangement, only one of the first or second chest portions 182A, 182B may include a user-input device, for example. In other embodiments, the first and second audio devices 150A, 150B are not disposed within the housing 180, but rather are configured as headphones worn by the user.

The first and second image sensors 130A, 130B are configured to capture image data to produce three-dimensional images of the scene as the user navigates the environment that are used by the object recognition algorithm(s) to detect objects and people, as described in detail below. As shown in FIG. 3, the first and second image sensors 130A, 130B are disposed with the first and second chest portions 182A, 182B such that they are forward-facing and capture image data of the scene directly in front of the user. In other embodiments, one or more additional image sensors may be disposed within the housing to provide image data in directions other than in front of the user 210, such as to the right, left and/or rear of the user.

When worn around the neck of the user, the vision-assist device may be tilted depending on the user's physical characteristics. FIG. 3 shows one of the appropriate ways for the vision-assist device to be worn by a user. The first and second chest portions 182A, 182B extend along the user's chest perpendicular to the ground and are parallel to each other, so that the first and second image sensors 130A, 130B are forward-facing and can capture image data of the scene correctly in front of the user. However, if the user's body is very thick or thin, or the vision-assist device is worn differently, the first and second chest portions 182A, 182B may be tilted upward or downward and the first and second image sensors 130A, 130B may not be forward-facing. As another example, one of the chest portions may be higher than the other. Therefore, the image captured by a user may to be tilted.

The first and second audio devices 150A, 150B produce auditory messages that are intended to be received by the user 210

. The auditory messages may provide menu navigation options to the user so that the user may program or otherwise set parameters of the vision-assist device 100. Auditory messages also include environmental information about the scene, as described in detail below. Further as described below, the first and second audio device 150A, 150B may produce auditory messages instructing a user as to how to adjust the position of the vision-assist device 100 following a calibration procedure. Although two audio devices are illustrated, more or fewer audio devices may be provided. In some embodiments, a microphone is also provided as a user-input device to enable voice-control of the vision-assist device 100. In this manner, the user may provide feedback to the vision assist device 100 using voice commands. As an example and not a limitation, first and/or second audio device 150A, 150B may be configured as a combination speaker/microphone device capable of both receiving voice commands and emitting auditory messages/sounds.

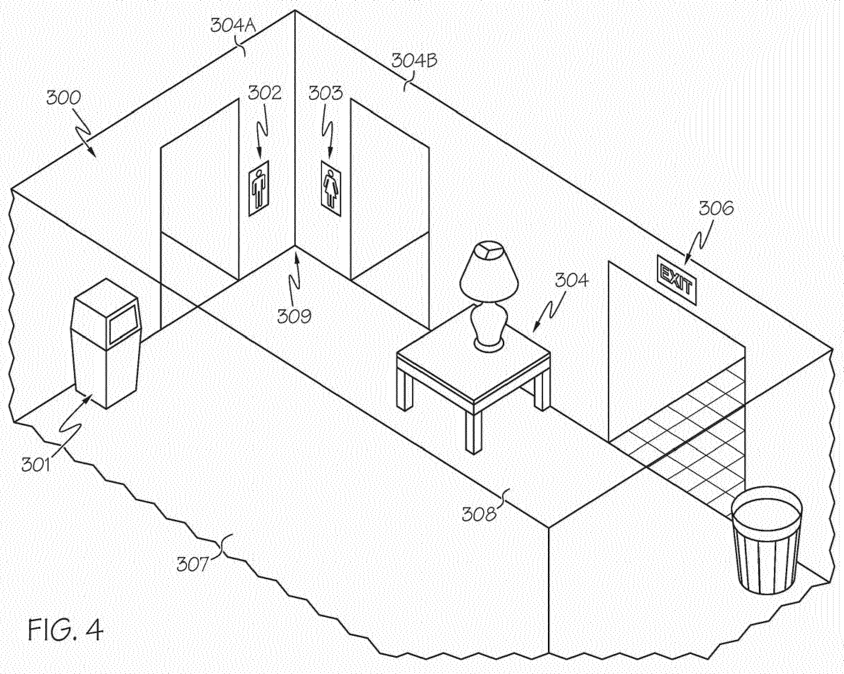

Operation of a vision-assist device 100 will now be described. FIG. 4 depicts a scene or environment 300 in which the user may navigate. For example, the environment 300 may be a store. Several objects and features are present within the illustrated environment 300, such as a trashcan 301, a men's restroom as indicated by a men's restroom sign 302, a women's restroom as indicated by a woman's restroom sign 303, walls 304A and 304B, floor 307, an exit as indicated by an exit sign 306, and a ceiling 308. As the user navigates the environment 300, the vision-assist device 100 captures image data and detects objects within the environment 300. Using one or more object detection algorithms, the vision-assist device 100 detects objects within the environment 300 and provides feedback (e.g., auditory feedback, haptic feedback, and the like) as to such detected objects to the user of the vision-assist device 100 .

Any known or yet-to-be-developed object recognition algorithms may be utilized to detect objects within the image data representing the environment. Example object recognition algorithms include, but are not limited to, edge detection algorithms, corner detection algorithms, blob detection algorithms, and feature description algorithms (e.g., scale-invariant feature transform ("SIFT"), speeded up robust features ("SURF"), gradient location and orientation histogram ("GLOH"), and the like. It should be understood that the phrase "object recognition algorithm" as used herein also includes facial recognition algorithms used to detect people present within image data.

As noted hereinabove, if the vision-assist device is not worn properly by the user, the images captured by the one or more image sensors 130 may be improperly oriented, such as tilted. Improper orientation of the one or more image sensors 130 may adversely affect the ability of the vision-assist device to properly detect objects. If the vision-assist device 100 is not in a proper position when worn by the user, the vision-assist device 100 may not be able to provide accurate feedback to the user regarding objects in the environment 300. Embodiments of the present disclosure provide for a calibration process to ensure that the vision-assist device 100 is properly worn by the user such that the one or more image sensors 130 have an optimal field of view of objects within the environment.

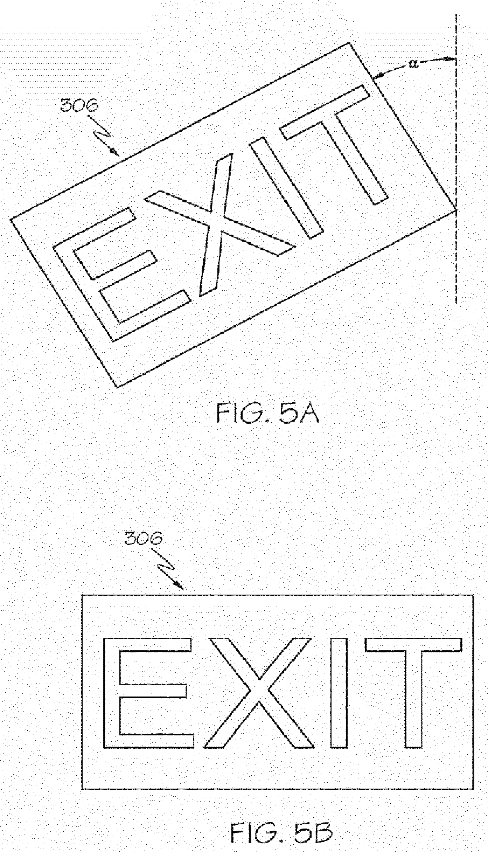

FIG. 5A depicts a tilted image of an exit sign 306 captured by one or more image sensors 130 when the vision-assist device 100 is improperly worn by the user. In the example of FIG. 5A, the exit sign 306 is tiled by an angle α with respect to vertical (i.e., the *y*-axis). It should be understood that the image of objects may be tilted with respect to one or more axes depending on how the vision-assist device 100 is worn. The tilting of the exit sign 306 within the image captured by the one or more image sensors 130 may make it not recognizable or detectable by the one or more object recognition algorithms of the vision-assist device 100. Thus, improper or no information may be relayed to the user by the vision-assist device 100. FIG. 5B illustrates an exit sign 306 that is properly orientated within an image captured by the one or more image sensors 130 of a vision-assist device 100 that is properly worn by a user. The one or more object recognition algorithms may more readily detect that the image contains an exit sign because the image is not tilted.

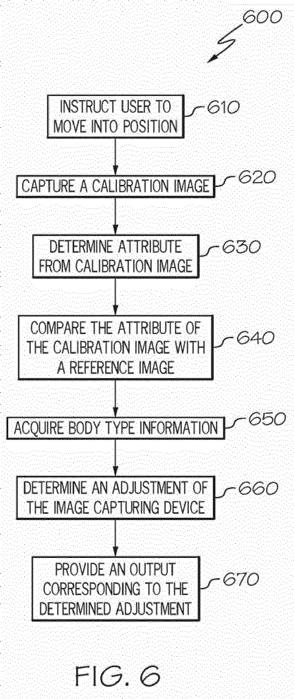

As noted hereinabove, embodiments of the present disclosure are directed to vision-assist devices 100 that are capable of performing a calibration process to ensure that the vision-assist device 100 is properly worn. FIG. 6 depicts a flowchart 600 of an example calibration process executed by the processor 110 of the vision-assist device 100. To start the calibration process, the user may provide an input to the vision-assist device 100 indicating that the user would like to initiate the calibration process. For example, the user may use input devices 160 to start the calibration process by pressing one or more buttons, or speaking an audible command. In some embodiments, the vision-assist device 100 provide auditory instructions (or haptic instructions) instructing the user to get into a proper position for the calibration process (block 610). In other embodiments, the vision-assist device 100 does not instruct the user to get into a proper position. Rather, it is assumed that the user is ready for the calibration process to begin.

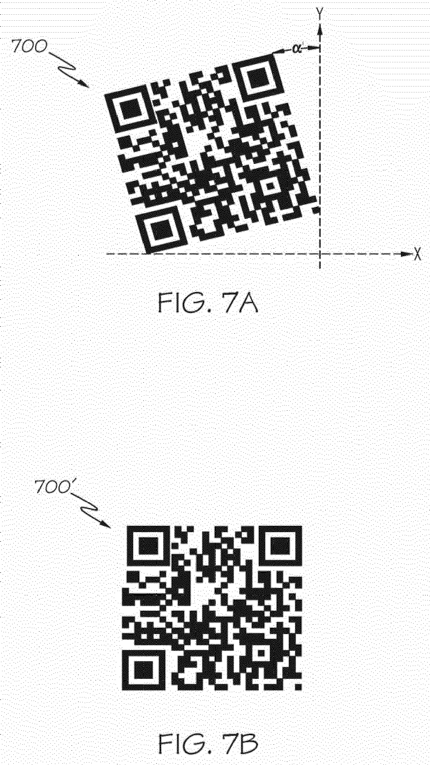

In one embodiment, the calibration process employs a hand-held object, or an object that is positioned at a known location, such as on a wall, on a table, or the like. As an example and not a limitation, the hand-held object may be a sign that is held by the user at an arm's length. The sign may include an image such as, without limitation, a two-dimensional barcode as depicted in FIGS. 7A and 7B. In embodiments where the object is not a hand-held object, the object may be configured as a poster or other object that includes a two-dimensional barcode. It should be understood that the object may include images or features other than a two-dimensional barcode.

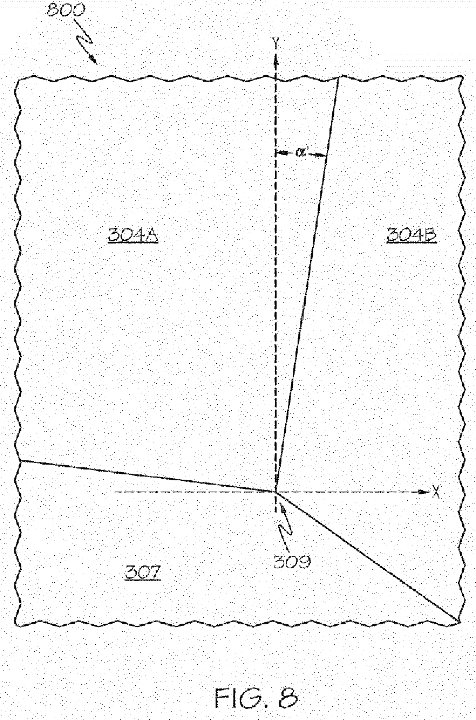

In another embodiment, the vision-assist device 100 may instruct the user to orient his or herself toward a wall, an intersection of wall, or an intersection between wall(s), ceiling, and/or floor. FIG. 4 depicts an intersection in the form of a corner 309 of a room. FIG. 8 depicts a calibration image 800 of a corner 309 of the room. As described in more detail below, the intersection is used by the vision-assist device to determine whether or not it is properly oriented.

At block 620, the vision-assist device 100 captures one or more calibration images using the one or more image sensors 130 in response to the user's input requesting the start of the calibration process. The calibration image may be in the form of one or more static digital images, or a video made up of many sequential digital images. The calibration image(s) may be stored in the memory component 170, for example.

In the object embodiment (e.g., hand-held object) depicted in FIG. 7A, the calibration image is an image of a calibration object, such as a hand-held object depicting a two-dimensional barcode. It should be understood that embodiments are not limited to two-dimensional barcodes. As shown in FIG. 7A, the calibration image 700 is tilted due to an improper orientation of the vision-assist device 100. In the embodiment depicted in FIG. 8, the calibration image is an image of the corner 309.

At block 630, one or more attributes of the calibration image is determined. As an example and not a limitation, the one or more attributes of the calibration image may be an angle between a detected edge or feature of the calibration image and an axis, such as a vertical axis (e.g., the *y*-axis) or a horizontal axis (e.g., the *x*-axis). In the example depicted in FIG. 7A, the calibration image 700 of the barcode is tilted by an angle α' with respect to the vertical or *y*-axis. In the example depicted in FIG. 8, the corner 309 within the calibration image 800 is tilted by an angle α" with respect to the vertical or *y*-axis.

At block 640, the one or more attributes of the calibration image (or images) is compared with one or more reference attributes. In the examples depicted in FIGS. 7A and 8, the reference attribute may be a reference angle that acts as a threshold for determining whether or not the vision-assist device is worn properly. As an example and not a limitation, the reference attribute may be an angle of 5 degrees with respect to a particular axis. If the angles α' and α" are greater than the reference attribute or angle (e.g., 5 degrees), the vision-assist device, using the processor, may determine that the vision-assist device is not worn properly by the user.

In some embodiments, the calibration process optionally moves to block 650, where body type information of the user is acquired. The body type information acquired at block 650 may be used by the processor of the vision-assist device to determine how to instruct the user to adjust the position of the vision-assist device. Particularly, in order to give the detailed instructions to the user, the processor 110 can acquire body type information (i.e., physical characteristics) of the user, such as height, weight, width of the neck, chest size, and the thickness of the body. The body type information can be acquired by the image of the user or by the input by the user. In some embodiments, the body type information is previously entered by the user and stored in the memory component 170. Additional information regarding acquiring and using body type information for image sensor calibration is found in U.S. Pat. Appl. No. 15/205,946, which is hereby incorporated by reference in its entirety. In other embodiments, body type information is not acquired and is not utilized by the processor 110 to determine an adjustment of the vision-assist device 100.

At block 660, the processor 110 determines an adjustment of the vision-assist device 100 needed so that the vision-assist device is properly worn by the user. This determination is made by comparing the angle(s) of the attribute of the calibration image with that of the reference attribute. The processor 110 may use this angle (or angles) to determine the magnitude and the direction by which the vision-assist device 100 should be adjusted. In one example, three attributed represented by three angles with respect to three axes (e.g., the *x*-, *y*- and *z*-axes) are used to perform a calculation as to how to adjust the vision-assist device in three dimensions. Where body type information is acquired, the body type information may be utilized in the determination as to how to adjust the vision-assist device.

At block 670, feedback is provided to the user with respect to the determined adjustment of the vision-assist device that may be needed so that the vision-assist device has an optimum field of view. In one example, the vision-assist device 100 produces audio signals using the audio device 150 that instructs the user how to reposition or adjust the vision-assist device 100 on his or her body. As an example and not a limitation, the vision-assist device 100 may state: "Please tilt both ends of the device downward," "Please tilt both ends of the device to the left," "Please tilt the left end of the device upward," and the like depending on the adjustment that is needed. It is noted that the way the instruction is communicated to the user is not limited to auditory instructions. As other non-limiting examples, the instructions may be communicated to the user through bone-conducting hardware worn by the user near his or her ears, or by haptic feedback by one or more vibration devices within the vision-assist device.

After the user adjusts the vision-assist device 100 in accordance with the instructions, the user may wish to perform another calibration process to ensure that the adjustment of the vision-assist device 100 was effective. Accordingly, the steps of flowchart 600 may be repeated until the vision-assist device 100 is properly oriented on the user.

After the position of the vision-assist device 100 is properly calibrated, the vision-assist device 100 may assist the user by properly detecting and advising the user as to objects as the user navigates the environment.

It should now be understood that embodiments described herein are directed to vision assist devices configured to be worn by a user, and to be adjusted in accordance with a calibration procedure to ensure that the vision-assist device is properly worn by the user. By calibrating the position of the vision-assist device on the user, the field of view of one or more image sensors of the vision-assist device is improved such that the automatic object recognition of objects detected by the vision-assist device in the environment is also improved. In this manner, more accurate information can be conveyed to the user by vision-assist device. Further, a blind or visually impaired person may recognize if the vision-assist device is worn properly or not, and he or she can calibrate the position of the vision-assist device without the need for human assistance.

While particular embodiments and aspects of the present disclosure have been illustrated and described herein, various other changes and modifications can be made without departing from the spirit and scope of the disclosure. Moreover, although various aspects have been described herein, such aspects need not be utilized in combination. Accordingly, it is therefore intended that the appended claims cover all such changes and modifications that are within the scope of the embodiments shown and described herein.

It should now be understood that embodiments disclosed herein includes systems, methods, and non-transitory computer-readable mediums for calibrating images. It should also be understood that these embodiments are merely exemplary and are not intended to limit the scope of this disclosure.

## Claims

1. A method of calibrating a vision-assist device, the method comprising:
capturing a calibration image using at least one image sensor of the vision-assist device;
obtaining at least one attribute of the calibration image;
comparing the at least one attribute of the calibration image with a reference attribute;
determining an adjustment of the at least one image sensor based at least in part on the comparison of the at least one attribute of the calibration image with the reference attribute; and
providing an output corresponding to the determined adjustment of the vision-assist device.

2. The method of claim 1, further comprising acquiring body type information corresponding to a body type of a user of the vision-assist device, wherein the determination of the adjustment of the at least one image sensor is further based in part on the body type information.

3. The method of claim 2, wherein:
acquiring the body type information further comprises receiving an image of the user; and
the method further comprises determining the body type information from the image of the user.

4. The method of claim 2, wherein acquiring the body type information further comprises receiving inputs corresponding to the body type information.

5. The method of claim 1, wherein the calibration image is an image of a calibration object, and the reference attribute is an angle of at least one edge within the calibration image.

6. The method of claim 5, wherein the calibration object is an object held by a user.

7. The method of claim 1, wherein:
the calibration image is of at least one of one or more walls, a ceiling, and a floor; and
the reference attribute is an edge defined by one or more of the one or more walls, the ceiling and the floor within the calibration image.

8. The method of claim 1, further comprising, after the adjustment of the vision-assist device:
capturing, using the at least one image sensor, one or more images of one or more objects; and
providing an output corresponding to the one or more objects within the one or more images of the one or more objects.

9. A vision-assist device comprising:
an image sensor configured to capture image data;
a feedback device configured to provide feedback to a user;
a processor;
a non-transitory computer-readable medium storing computer-readable instructions that, when executed by the processor, causes the processor to:
capture a calibration image using at least one image sensor of the vision-assist device;
obtain at least one attribute of the calibration image;
compare the at least one attribute of the calibration image with a reference attribute;
determine an adjustment of the at least one image sensor based at least in part on the comparison of the at least one attribute of the calibration image with the reference attribute; and
provide feedback corresponding to the determined adjustment of the vision-assist device using the feedback device.

10. The vision-assist device of claim 9, further comprising an inertial measurement unit operable to determine a tilt of the vision-assist device, wherein the adjustment of the at least one image sensor is further based at least in part on the tilt of the vision-assist device determined by the inertial measurement unit.

11. The vision-assist device of claim 9, wherein the computer-readable instructions further cause the processor to acquire body type information corresponding to a body type of a user of the vision-assist device, wherein the determination of the adjustment of the at least one image sensor is further based in part on the body type information.

12. The vision-assist device of claim 11, wherein:
the body type information is acquired by receiving an image of the user; and
the computer-readable instructions further cause the processor to determine the body type information from the image of the user.

13. The vision-assist device of claim 9, wherein the body type information is acquired by receiving inputs corresponding to the body type information.

14. The vision-assist device of claim 9, wherein the calibration image is an image of a calibration object, and the reference attribute is an angle of at least one edge within the calibration image.

15. The vision-assist device of claim 9, wherein the computer-readable instructions further cause the processor to, after the adjustment of the image sensor:
capture one or more images of one or more objects using the image sensor; and
provide feedback corresponding to the one or more objects within the one or more images using the feedback device.
